# EUROPÄISCHE PATENTANMELDUNG

(11) **EP 3 482 862 A1**
(43) Veröffentlichungstag der Anmeldung: **15.05.2019**
(21) Anmeldenummer: 17200599.3
(22) Anmeldetag: 08.11.2017
(51) Int. Cl.: B23K 9/067

(54) **VERFAHREN ZUR BERÜHRUNGSLOSEN ZÜNDUNG EINES LICHTBOGENS UND SCHWEISSSTROMQUELLE ZUR DURCHFÜHRUNG EINES ZÜNDVERFAHRENS**

(71) Anmelder: FRONIUS INTERNATIONAL GmbH, 4643 Pettenbach (AT)
(72) Erfinder: MUSIL, Franz Peter, 4652 Steinerkirchen an der Traun (AT); PRINZ, Andreas, 4621 Sipbachzell (AT)
(74) Vertreter: Sonn & Partner Patentanwälte

(57) **Zusammenfassung**

Die Erfindung betrifft ein Verfahren zur berührungslosen Zündung eines Lichtbogens (L) zwischen einer Elektrode (3) und einem zu verschweißenden Werkstück (4) zur Durchführung eines Schweißverfahrens, wobei ein Schweißstrom (I) und eine Schweißspannung (U) an einem Ausgang (2) einer Schweißstromquelle (1) bereitgestellt werden, wobei die Schweißstromquelle (1) einen Resonanzkonverter (5) zur Erzeugung einer sich periodisch ändernden, vorzugsweise im Wesentlichen sägezahnförmigen, Leerlaufschweißspannung (U_{LL}) mit periodisch mit einer Wiederholfrequenz (f_{w}) wiederkehrenden Spannungsmaxima (U_{LL,max}) beinhaltet, sowie eine Schweißstromquelle (1) zur Durchführung eines Zündverfahrens. Zum Erzielen einer sicheren berührungslosen Zündung des Lichtbogens (L) ohne aufwendige Beschaltung werden der Leerlaufschweißspannung (U_{LL}) im Bereich zumindest mancher periodisch wiederkehrender Spannungsmaxima (U_{LL,max}) der Leerlaufschweißspannung (U_{LL}) zeitlich synchron Hochfrequenzpulse (U_{I,HF}) überlagert.

## Beschreibung

Die Erfindung betrifft ein Verfahren zur berührungslosen Zündung eines Lichtbogens zwischen einer Elektrode und einem zu verschweißenden Werkstück zur Durchführung eines Schweißverfahrens, wobei ein Schweißstrom und eine Schweißspannung an einem Ausgang einer Schweißstromquelle bereitgestellt werden, wobei die Schweißstromquelle einen Resonanzkonverter zur Erzeugung einer sich periodisch ändernden, vorzugsweise im Wesentlichen sägezahnförmigen, Leerlaufschweißspannung mit periodisch mit einer Wiederholfrequenz wiederkehrenden Spannungsmaxima beinhaltet.

Die Erfindung betrifft weiters eine Schweißstromquelle zur Bereitstellung eines Schweißstroms und einer Schweißspannung an einem Ausgang zur Durchführung eines Schweißverfahrens mit einem Lichtbogen zwischen einer Elektrode und einem zu verschweißenden Werkstück, mit einem Resonanzkonverter zur Erzeugung einer sich periodisch ändernden, vorzugsweise im Wesentlichen sägezahnförmigen, Leerlaufschweißspannung mit periodisch mit einer Wiederholfrequenz wiederkehrenden Spannungsmaxima.

Die vorliegende Erfindung betrifft ein Zündverfahren und eine Schweißstromquelle zur Durchführung eines Zündverfahrens für die Schweißtechnik, wobei sowohl Schweißverfahren mit abschmelzender Elektrode, wie z.B. MIG (Metall-Inertgas)- oder MAG (Metall-Aktivgas)-Schweißverfahren, als auch Schweißverfahren mit nicht abschmelzender Elektrode, wie z.B. WIG (Wolfram-Inertgas)-Schweißverfahren, denkbar sind.

Zum berührungslosen Zünden des für das Schweißverfahren notwendigen Lichtbogens zwischen der Elektrode und dem zu verschweißenden Werkstück ist eine hohe Spannung von Vorteil. Aus Gründen der Sicherheit ist jedoch die dauerhaft zugelassene maximale Leerlaufschweißspannung am Ausgang einer Schweißstromquelle üblicherweise normativ begrenzt.

Man ist daher dazu bestrebt die Schweißstromquellen so auszubilden, dass einerseits die Sicherheitsvorschriften erfüllt werden und andererseits ein sicheres Zünden des Lichtbogens gewährleistet wird. Hierzu gibt es verschiedene Methoden welche zum Teil einen erheblichen Schaltungsaufwand beinhalten, der nicht nur die Kosten einer Schweißstromquelle erhöhen, sondern auch die Baugröße, da die Schaltungen zur Verbesserung des Zündverhaltens einen beträchtlichen Teil der Schweißstromquelle einnehmen können.

Beispielsweise werden bei Schweißstromquellen des Standes der Technik Hilfsspannungsquellen verwendet, um die Ausgangsspannung anzuheben und eine Zündung des Lichtbogens zu ermöglichen.

So ist beispielsweise aus der WO 2005/051585 A1 bekannt zum berührungslosen Zünden Hochfrequenzpulse auf die Schweißspannung einzukoppeln.

Die vorliegende Erfindung ist auf ein oben genanntes Zündverfahren und eine oben genannte Schweißstromquelle zur Durchführung eines Zündverfahrens gerichtet, bei der ein Resonanzkonverter zur Erzeugung einer sich periodisch ändernden, vorzugsweise im Wesentlichen sägezahnförmigen, Leerlaufschweißspannung mit periodisch mit einer Wiederholfrequenz wiederkehrenden Spannungsmaxima beinhaltet.

Resonanzkonverter sind elektrische Schaltungen, welche auf Resonanz mit einer bestimmten Resonanzfrequenz beruhen. Üblicherweise werden Impulse mit einer Frequenz nahe dieser Resonanzfrequenz angelegt und dadurch der Resonanzkreis mit der Resonanzfrequenz angeregt, wodurch eine sich periodisch ändernde Ausgangsspannung resultiert. Beispielsweise beschreibt die WO 2016/142218 A1 einen Resonanzwandler mit entsprechenden kapazitiven und induktiven Bauelementen, der auch in einer Stromquelle für ein Schweißgerät Anwendung finden kann.

Die Aufgabe der vorliegenden Erfindung besteht darin, ein oben genanntes Verfahren und eine oben genannte Schweißstromquelle zu schaffen, welche ein sicheres Zünden des Lichtbogens gewährleisten aber einen möglichst geringen Aufwand verursachen, um eine wirtschaftliche Anwendung auch bei den oben genannten kostengünstigen Schweißstromquellen mit Resonanzkonvertern zur Erzeugung einer sich periodisch ändernden Leerlaufspannung zu ermöglichen. Nachteile bekannter Verfahren sollen vermieden oder zumindest reduziert werden.

Gelöst wird die erfindungsgemäße Aufgabe in verfahrensmäßiger Hinsicht dadurch, dass der Leerlaufschweißspannung im Bereich zumindest mancher periodisch wiederkehrender Spannungsmaxima der Leerlaufschweißspannung zeitlich synchron Hochfrequenzpulse überlagert werden. Das vorliegende Verfahren sieht also vor, die Hochfrequenzpulse zeitlich synchron mit zumindest manchen Spannungsmaxima der sich periodisch ändernden Leerlaufschweißspannung zu überlagern, wodurch bestmögliche Zündeigenschaften erreicht werden können. Aufwändige Schaltungen zur Erhöhung der Zündspannung, wie z.B. Spannungsverdopplerschaltungen oder andere Hilfsschaltungen, sind nicht notwendig, weshalb der Aufwand für die Durchführung des Verfahrens sehr gering gehalten werden kann. Dadurch, dass die Hochfrequenzpulse zeitlich synchron dem Spannungsmaxima der Leerlaufschweißspannung überlagert werden, können die Zündeigenschaften verbessert werden und gleichzeitig geltende Sicherheitsvorschriften eingehalten werden. Dadurch, dass die Hochfrequenzpulse nicht zwingend jedem Spannungsmaximum der Leerlaufschweißspannung überlagert werden müssen, kann die mittlere dauerhaft anliegende Leerlaufschweißspannung unterhalb normativer Grenzwerte gehalten werden.

Mit der Aussage, dass die Hochfrequenzpulse im Bereich des Spannungsmaximums überlagert werden soll zum Ausdruck gebracht werden, dass die Hochfrequenzpulse nicht exakt zum Zeitpunkt des Auftretens des Spannungsmaximums überlagert werden müssen, sondern dies in einem Bereich vor oder nach Auftreten des Spannungsmaximums erfolgen kann. Erfahrungsgemäß ist eine Überlagerung der Hochfrequenzpulse im Bereich des Spannungsmaximums bzw. 90% des Spannungsmaximums optimal bzw. ausreichend.

Vorteilhafterweise werden der Leerlaufschweißspannung im Bereich jedes n-ten Spannungsmaximums der Leerlaufschweißspannung zeitlich synchron Hochfrequenzpulse überlagert, wobei n eine ganze positive Zahl größer oder gleich 1 ist. Durch entsprechende Wahl der Zahl n kann einerseits die im Mittel am Ausgang der Schweißstromquelle übertragene Energie limitiert werden, um die Sicherheitsvorschriften einhalten zu können, und andererseits auch darauf Rücksicht genommen werden, dass die Erzeugung der Hochfrequenzpulse durch das Aufladen entsprechender Speicherbauelemente, wie Kondensatoren, eine gewisse Zeit benötigt.

Gemäß einem weiteren Merkmal der Erfindung wird die Schweißspannung gemessen und das Überschreiten eines vorgegebenen Spannungswerts detektiert und es werden die Hochfrequenzpulse zumindest manchen detektierten vorgegebenen Spannungswerten zeitlich synchron überlagert. Durch die zusätzliche Messung der Leerlaufschweißspannung kann die zeitliche Synchronität der Überlagerung der Hochfrequenzpulse mit zumindest manchen Spannungsmaxima verbessert werden, da die realen Bedingungen berücksichtigt werden. Durch die Einstellung des vorgegebenen Spannungswerts im Bereich der zu erwartenden Spannungsmaxima kann der Zeitpunkt des Auftretens der Spannungsmaxima sehr zuverlässig festgestellt werden und der Hochfrequenzpuls dem Spannungsmaximum zeitlich synchron überlagert werden.

Die Hochfrequenzpulse können um eine vorgegebene Zeitspanne, vorzugsweise bis 5ms, vor oder nach Auftreten des Spannungsmaximums überlagert werden. Wie bereits oben erwähnt muss das Überlagern der Hochfrequenzpulse nicht exakt im Zeitpunkt des Spannungsmaximums vorgenommen werden, sondern kann auch in einem Bereich davor bzw. danach stattfinden, ohne dass die Zündeigenschaften wesentlich verschlechtert werden. Bei üblichen Zündverfahren haben sich Verzögerungen im Bereich zwischen 0 und 5ms als geeignet herausgestellt.

Vorteilhafterweise wird eine Leerlaufschweißspannung mit einer Wiederholfrequenz zwischen 10Hz und 100Hz, insbesondere 33Hz, zur Verfügung gestellt. Diese Frequenzbereiche stellen geeignete Werte bei Schweißstromquellen dar.

Idealerweise werden Hochfrequenzpulse mit einer Frequenz zwischen 100kHz und 10MHz überlagert. Hochfrequenzpulse mit einer derartigen Frequenz weisen eine Amplitude von mehreren kV auf, um die Zündstrecke für die Zündung ausreichend zu ionisieren.

Gelöst wird die erfindungsgemäße Aufgabe auch durch eine oben genannte Schweißstromquelle, bei welcher eine Schaltung zur Erzeugung von Hochfrequenzpulsen vorgesehen ist, welche Schaltung zum berührungslosen Zünden des Lichtbogens zur Überlagerung der Hochfrequenzpulse zu der Leerlaufschweißspannung zeitlich synchron im Bereich zumindest mancher periodisch wiederkehrender Spannungsmaxima der Leerlaufschweißspannung ausgebildet ist. Eine derartige Schweißstromquelle zeichnet sich durch einen relativ einfachen und kostengünstig herstellbaren Aufbau und geringe Baugröße aus. Zu den weiteren dadurch erzielbaren Vorteilen wird auf die obige Beschreibung des erfindungsgemäßen Verfahrens verwiesen.

Vorteilhafterweise ist die Schaltung zur Erzeugung der Hochfrequenzpulse zur zeitlich synchronen Überlagerung der Hochfrequenzpulse der Leerlaufschweißspannung im Bereich jedes n-ten Spannungsmaximums der Leerlaufschweißspannung ausgebildet, wobei n eine ganze positive Zahl größer oder gleich 1 ist. Wie bereits oben erwähnt ist es nicht zwingend erforderlich bei jedem Spannungsmaximum der Leerlaufschweißspannung entsprechende Hochfrequenzpulse zu überlagern um eine sichere und geeignete Zündung des Lichtbogens gewährleisten zu können.

Gemäß einem weiteren Merkmal der Erfindung ist eine Messeinrichtung zur Detektion der Schweißspannung vorgesehen, welche Messeinrichtung über eine Regelungseinrichtung mit der Schaltung zur Erzeugung der Hochfrequenzpulse verbunden ist, sodass die Hochfrequenzpulse zeitlich synchron mit den detektierten definierten Spannungswerten überlagerbar sind. Die Messeinrichtung kann durch eine üblicherweise vorhandene Einrichtung zur Überwachung der Schweißspannung gebildet werden, sodass keine zusätzliche Hardware erforderlich ist.

Weiters kann die Schaltung zur Erzeugung der Hochfrequenzpulse zur zeitlich um eine vorgegebene Zeitspanne, vorzugsweise bis 5ms, vor oder nach Auftreten des Spannungsmaximums versetzten Überlagerung der Hochfrequenzpulse ausgebildet sein.

Vorteilhafterweise ist die Schaltung zur Erzeugung der sich periodisch ändernden Leerlaufschweißspannung mit einer Wiederholfrequenz zwischen 10Hz und 100Hz, insbesondere 33Hz, ausgebildet.

Idealerweise ist die Schaltung zur Erzeugung von Hochfrequenzpulsen zwischen 100kHz und 10MHz ausgebildet.

Der Resonanzkonverter zur Erzeugung der sich periodisch ändernden Leerlaufschweißspannung ist vorzugsweise durch einen Serien-Parallel-Resonanzkonverter gebildet. Eine derartige Schaltung als Teil der Schweißstromquelle ist besonders einfach und somit kostengünstig sowie platzsparend aufgebaut.

Die Elektrode kann durch eine nichtabschmelzende Elektrode, insbesondere eine Wolframelektrode, gebildet sein. Insbesondere bei WIG-Schweißverfahren mit nichtabschmelzender Wolframelektrode stellt die berührungslose Zündung des Lichtbogens bei geringen Leerlaufspannungen eine besondere Herausforderung dar.

Die vorliegende Erfindung wird anhand der beigefügten Zeichnungen näher erläutert. Darin zeigen:
- Fig. 1: ein Blockschaltbild einer Schweißstromquelle gemäß der vorliegenden Erfindung;
- Fig. 2: ein Blockschaltbild einer weiteren Ausführungsvariante einer Schweißstromquelle gemäß der vorliegenden Erfindung;
- Fig. 3: den Zeitverlauf der Leerlaufschweißspannung einer Schweißstromquelle mit einem Resonanzkonverter;
- Fig. 4: den Zeitverlauf der Leerlaufschweißspannung bei Anwendung des erfindungsgemäßen Zündverfahrens;
- Fig. 5: den Zeitverlauf der Leerlaufschweißspannung bei einer Variante des erfindungsgemäßen Zündverfahrens; und
- Fig. 6: den Zeitverlauf der Leerlaufschweißspannung bei einer weiteren Variante des Zündverfahrens.

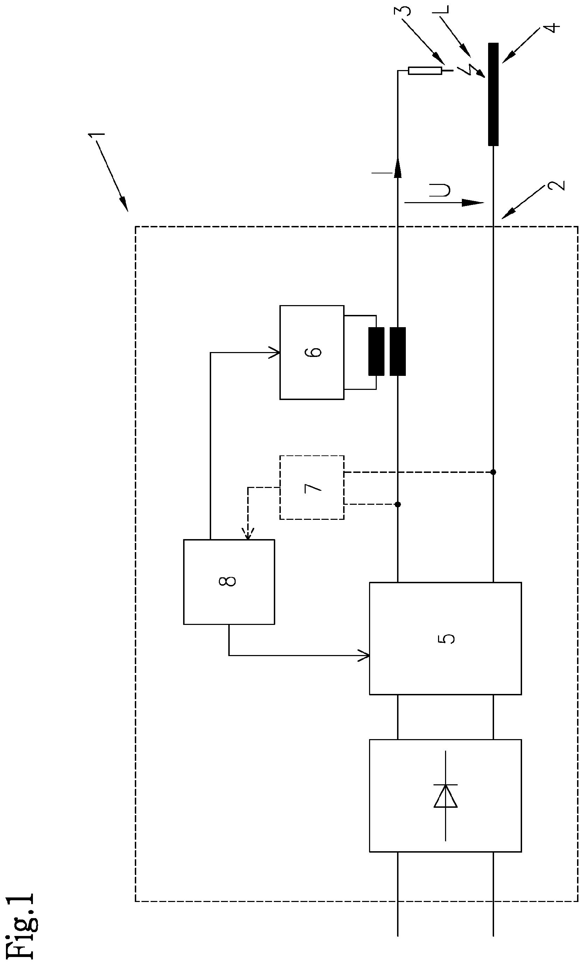

Fig. 1 zeigt ein Blockschaltbild einer Schweißstromquelle 1 gemäß der vorliegenden Erfindung. Die Schweißstromquelle 1 dient zur Bereitstellung eines Schweißstroms I und einer Schweißspannung U an einem Ausgang 2 zur Durchführung eines Schweißverfahrens mit einem Lichtbogen L zwischen einer Elektrode 3 und einem zu verschweißendem Werkstück 4. Die Elektrode 3 kann eine nichtabschmelzende Elektrode, insbesondere Wolframelektrode, aber auch eine abschmelzende Elektrode sein. Die Schweißstromquelle 1 beinhaltet einen Resonanzkonverter 5 zur Erzeugung der Schweißspannung U. Der Resonanzkonverter 5 kann insbesondere durch einen Serien-Parallel-Resonanzkonverter gebildet sein. Derartige Schaltungen sind besonders einfach aufgebaut und werden bei einer Reihe von Schweißstromquellen 1 verwendet. Der Resonanzkonverter 5 ist über entsprechende Vorschaltungen, wie z.B. Gleichrichter oder dgl., mit dem Versorgungsnetz verbunden.

Zur berührungslosen Zündung des Lichtbogens L zwischen Elektrode 3 und Werkstück 4 ist eine Schaltung 6 zur Erzeugung von Hochfrequenzpulsen U_{I,HF} vorgesehen, welche Hochfrequenzpulse U_{I,HF} der Leerlaufschweißspannung U_{LL} am Ausgang 2 der Schweißstromquelle 1 überlagert werden und zwar zeitlich synchron im Bereich zumindest mancher der periodisch wiederkehrenden Spannungsmaxima U_{LL,max} der Leerlaufschweißspannung U_{LL}. Unter der Voraussetzung fester zeitlicher Parameter können die Zeitpunkte der periodisch wiederkehrenden Spannungsmaxima U_{LL,max} mit hinreichender Genauigkeit bestimmt werden und die Überlagerung der Hochfrequenzpulse U_{I,HF} hinreichend genau vorgenommen werden. Die Schaltung 6 zur Erzeugung von Hochfrequenzpulsen U_{I,HF} kann auch parallel zum Ausgang 2 bzw. Lichtbogen L angeordnet sein (nicht dargestellt).

Zur Verbesserung der zeitlichen Synchronität der Überlagerung kann eine Regelungseinrichtung 8 vorgesehen sein, welche die Schaltung 6 zur Erzeugung von Hochfrequenzpulsen U_{I,HF} entsprechend regelt. Optional kann eine Messeinrichtung 7 zur Detektion der Schweißspannung U vorgesehen sein, welche Messeinrichtung 7 mit der Regelungseinrichtung 8 verbunden ist, sodass die Hochfrequenzpulse U_{I,HF} zeitlich synchron mit detektierten definierten Spannungswerten U_{LL,def} am Ausgang 2 überlagerbar sind.

Dadurch, dass die Hochfrequenzpulse U_{I,HF} im Bereich der Spannungsmaxima U_{LL,max} der Leerlaufspannung U_{LL} überlagert werden, kann die Zündspannung erhöht werden und somit eine sichere Zündung des Lichtbogens L gewährleistet werden. Der zusätzliche Schaltungsaufwand ist minimal, weshalb die Schweißstromquelle 1 gegenüber herkömmlichen Schweißstromquellen nicht wesentlich größer und teurer ausgebildet sein muss. Die Hochfrequenzpulse U_{I,HF} können kurz vor oder kurz nach dem Auftreten des Maximums der Leerlaufspannung U_{LL,max} dieser überlagert werden. Die Hochfrequenzpulse U_{I,HF} müssen nicht bei jedem Spannungsmaximum U_{LL,max} überlagert werden, sondern nur bei einem Teil der Spannungsmaxima U_{LL,max}, beispielsweise nur bei jedem zweiten oder jedem dritten Spannungsmaximum U_{LL,max}.

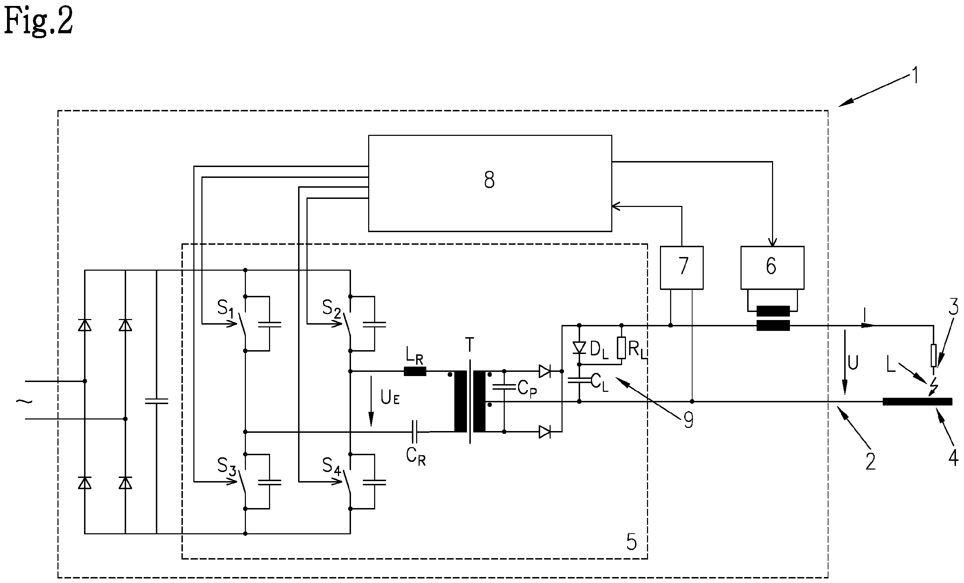

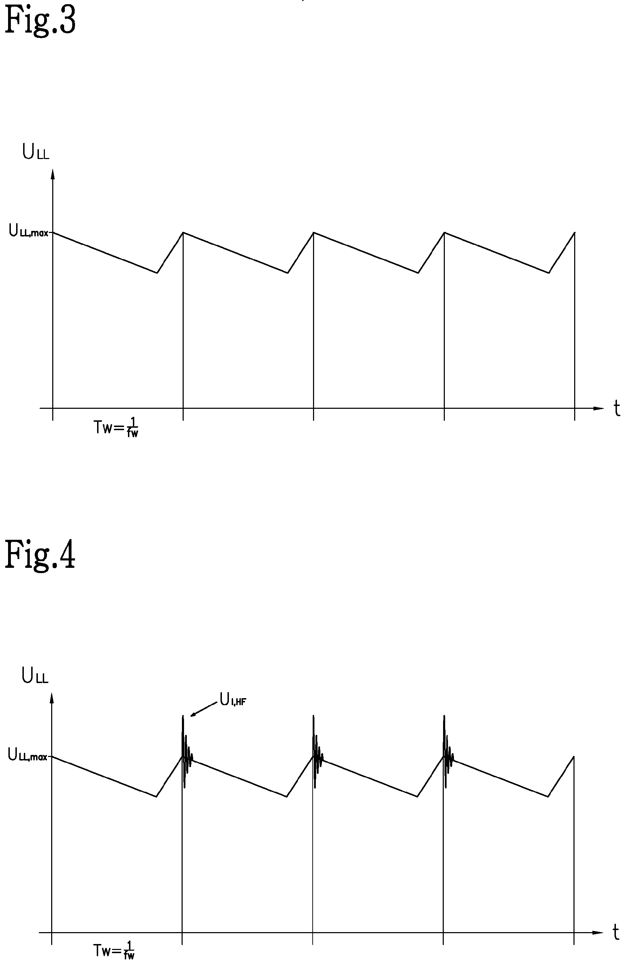

Fig. 2 zeigt eine gegenüber Fig. 1 erweiterte Blockschaltung einer Schweißstromquelle 1, wobei der Resonanzwandler 5 zur Erzeugung der sich periodisch ändernden Leerlaufschweißspannung U_{LL} durch einen Serien-Parallel-Resonanzkonverter mit einer Induktivität L_{R}, einer Kapazität C_{R} und einer Kapazität C_{P} gebildet ist. Weiters weist der Resonanzkonverter 5 einen Transformator T auf. Die Schalter S1, S2, S3 und S4 erzeugen am Eingang U_{E} des Resonanzkreises Spannungspulse, die den Resonanzkreis L_{R}, C_{R} und Cₚ anregen. Die parallel zu den Schaltern S1 bis S4 gezeigten Kondensatoren sind deren parasitäre Kapazitäten und haben auf den Resonanzkreis keinen Einfluss, weil sie um ein Vielfaches kleiner sind als die Kapazität C_{R}. Der dargestellte Serien-Parallel-Resonanzwandler hat außerdem die Eigenschaft, dass sich die Schweißspannung U im Leerlauf (also ohne angeschlossene Last) aufgrund des mit C_{P} gebildeten Schwingkreises derart erhöht, dass auch eine Regelung des Resonanzwandlers 5 im Leerlauf erforderlich ist. Dazu wird der Resonanzwandler 5 im Leerlauf gepulst betrieben. An dem Eingang U_{E} des Resonanzwandlers 5 werden hierzu für eine bestimmte Zeitspanne Spannungspulse angelegt. Eine Zusatzbeschaltung 9 zur Aufrechterhaltung der Leerlaufschweißspannung U_{LL}, bestehend aus der Diode D_{L}, dem Widertand R_{L} und dem Kondensator C_{L}, stellt eine Realisierungsmöglichkeit dar, um den Serien-Parallel Resonanzkonverter im Leerlauf gepulst zu betreiben. Die durch den Resonanzwandler 5 erzeugte Schwingung lädt den Glättungskondensator C_{L} über die Diode D_{L} auf der Sekundärseite auf. In der Zeit, in der keine Spannungspulse angelegt werden, entlädt sich der Glättungskondensator C_{L} über den Widerstand R_{L}. Es stellt sich am Ausgang des Resonanzwandlers 5 daher eine sich periodisch ändernde, vorzugsweise im Wesentlichen sägezahnförmigen Leerlaufschweißspannung U_{LL} mit periodisch mit einer Wiederholfrequenz f_{W} wiederkehrenden Spannungsmaxima U_{LL,max} (s. Fig. 3) ein.

In Fig. 3 ist der Zeitverlauf der Leerlaufschweißspannung U_{LL} einer Schweißstromquelle 1 mit einem Resonanzkonverter dargestellt. Dementsprechend resultiert am Ausgang 2 der Schweißstromquelle 1 eine Leerlaufschweißspannung U_{LL} mit einer sich periodisch ändernden, im Wesentlichen sägezahnförmigen Leerlaufschweißspannung U_{LL} mit gemäß einer Wiederholfrequenz f_{W} wiederkehrenden Spannungsmaxima U_{LL,max}.

Fig. 4 zeigt den Zeitverlauf der Leerlaufschweißspannung U_{LL} bei Anwendung des erfindungsgemäßen Zündverfahrens. Dabei wird bei manchen (hier bei jedem) der auftretenden Spannungsmaxima U_{LL,max} im Bereich des Spannungsmaximum U_{LL,max} ein Hochfrequenzpuls U_{I,HF} überlagert. Dadurch wird die Zündung des Lichtbogens L erleichtert ohne dass die maximale durchschnittliche Spannung am Ausgang 2 der Schweißstromquelle 1 über vorgeschriebene Grenzwerte hinausgeht. Wichtig ist, dass der Energieinhalt der Hochfrequenzpulse U_{I,HF} über die Zeit normative Grenzwerte nicht überschreitet.

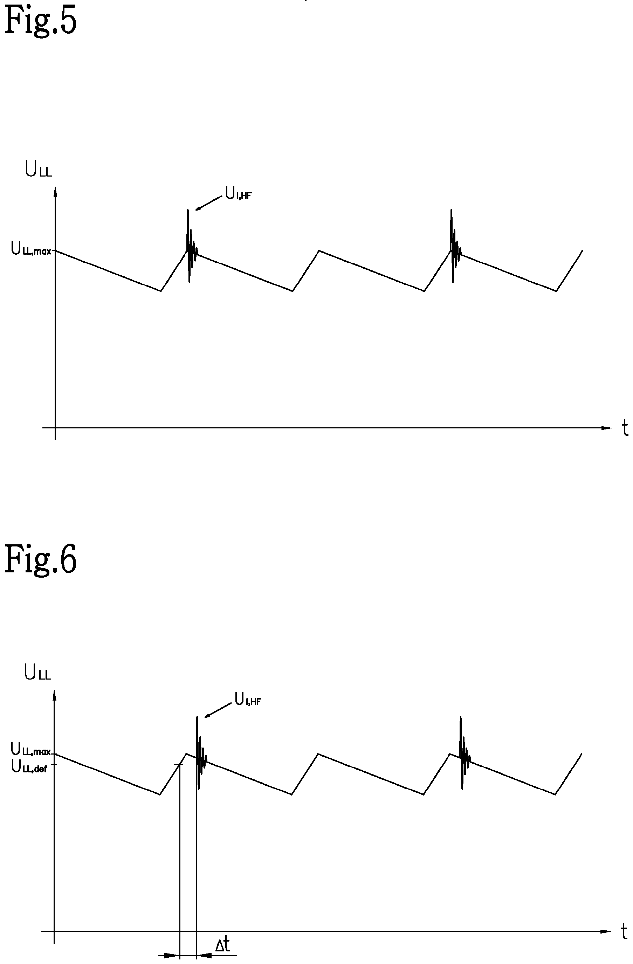

Fig. 5 zeigt den Zeitverlauf der Leerlaufschweißspannung U_{LL} am Ausgang 2 der Schweißstromquelle 1 bei einer Variante des Zündverfahrens gegenüber Fig. 3. Dementsprechend werden nur bei jedem zweiten Maximum der Leerlaufspannung U_{LL,max} die Hochfrequenzpulse U_{I,HF} überlagert. Demgemäß steht mehr Zeit für das Wiederaufladen speichernder Bauelemente der Schaltung 6 zur Erzeugung der Hochfrequenzpulse U_{I,HF} zur Verfügung und es wird über die Zeit eine geringere Energiemenge über den Ausgang 2 übertragen.

Fig. 6 zeigt einen Ausschnitt des zeitlichen Verlaufs der Leerlaufspannung U_{LL} am Ausgang 2 einer Schweißstromquelle 1, wobei die Leerlaufschweißspannung U_{LL} laufend gemessen wird und mit einem definierten Spannungswert U_{LL,def} verglichen wird. Der definierte Spannungswert U_{LL,def} liegt etwas unterhalb der erwarteten oder eingestellten maximalen Leerlaufschweißspannung U_{LL,max}, sodass die Detektion im Bereich des Spannungsmaximums U_{LL,max} sicher gewährleistet werden kann. Nach der Detektion des definierten Spannungswert U_{LL,def} wird zumindest in manchen Fällen ein Hochfrequenzimpuls U_{I,HF} überlagert, welcher die berührungslose Zündung des Lichtbogens L erleichtert bzw. ermöglicht. Die zeitliche Verschiebung zwischen dem Auftreten des definierten Spannungswerts U_{LL,def} und dem Zeitpunkt der Überlagerung des Hochfrequenzpulses U_{I,HF} erfolgt um eine vorgegebene Zeitspanne Δt versetzt, wobei die Zeitspanne Δt beispielsweise zwischen 0 und 5ms betragen kann.

## Patentansprüche

1. Verfahren zur berührungslosen Zündung eines Lichtbogens (L) zwischen einer Elektrode (3) und einem zu verschweißenden Werkstück (4) zur Durchführung eines Schweißverfahrens, wobei ein Schweißstrom (I) und eine Schweißspannung (U) an einem Ausgang (2) einer Schweißstromquelle (1) bereitgestellt werden, wobei die Schweißstromquelle (1) einen Resonanzkonverter (5) zur Erzeugung einer sich periodisch ändernden, vorzugsweise im Wesentlichen sägezahnförmigen, Leerlaufschweißspannung (U_{LL}) mit periodisch mit einer Wiederholfrequenz (f_{w}) wiederkehrenden Spannungsmaxima (U_{LL,max}) beinhaltet, **dadurch gekennzeichnet, dass** der Leerlaufschweißspannung (U_{LL}) im Bereich zumindest mancher periodisch wiederkehrender Spannungsmaxima (U_{LL,max}) der Leerlaufschweißspannung (U_{LL}) zeitlich synchron Hochfrequenzpulse (U_{I,HF}) überlagert werden.

2. Verfahren nach Anspruch 1, **dadurch gekennzeichnet, dass** der Leerlaufschweißspannung (U_{LL}) im Bereich jedes n-ten Spannungsmaximums (U_{LL,max}) der Leerlaufschweißspannung (U_{LL}) zeitlich synchron Hochfrequenzpulse (U_{I,HF}) überlagert werden, wobei n eine ganze positive Zahl größer oder gleich 1 ist.

3. Verfahren nach Anspruch 1 oder 2, **dadurch gekennzeichnet, dass** die Schweißspannung (U) gemessen wird und das Überschreiten eines vorgegebenen Spannungswerts (U_{LL,def}) detektiert wird, und die Hochfrequenzpulse (U_{I,HF}) zumindest manchen detektierten vorgegebenen Spannungswerten (U_{LL},_{def}) zeitlich synchron überlagert werden.

4. Verfahren nach einem der Ansprüche 1 bis 3, **dadurch gekennzeichnet, dass** die Hochfrequenzpulse (U_{I,HF}) um eine vorgegebene Zeitspanne (Δt), vorzugsweise bis 5ms, vor oder nach Auftreten des Spannungsmaximums (U_{LL,max}) überlagert werden.

5. Verfahren nach einem der Ansprüche 1 bis 4, **dadurch gekennzeichnet, dass** eine Leerlaufschweißspannung (U_{LL}) mit einer Wiederholfrequenz (f_{W}) zwischen 10Hz und 100Hz, insbesondere 33Hz, zur Verfügung gestellt wird.

6. Verfahren nach einem der Ansprüche 1 bis 5, **dadurch gekennzeichnet, dass** Hochfrequenzpulse (U_{I,HF}) mit einer Frequenz (f_{I}) zwischen 100kHz und 10MHz überlagert werden.

7. Schweißstromquelle (1) zur Bereitstellung eines Schweißstroms (I) und einer Schweißspannung (U) an einem Ausgang (2) zur Durchführung eines Schweißverfahrens mit einem Lichtbogen (L) zwischen einer Elektrode (3) und einem zu verschweißenden Werkstück (4), mit einem Resonanzkonverter (5) zur Erzeugung einer sich periodisch ändernden, vorzugsweise im Wesentlichen sägezahnförmigen, Leerlaufschweißspannung (U_{LL}) mit periodisch mit einer Wiederholfrequenz (f_{W}) wiederkehrenden Spannungsmaxima (U_{LL,max}), **dadurch gekennzeichnet, dass** eine Schaltung (6) zur Erzeugung von Hochfrequenzpulsen (U_{I,HF}) vorgesehen ist, welche Schaltung (6) zum berührungslosen Zünden des Lichtbogens (L) zur Überlagerung der Hochfrequenzpulse (U_{I,HF}) zu der Leerlaufschweißspannung (U_{LL}) zeitlich synchron im Bereich zumindest mancher periodisch wiederkehrender Spannungsmaxima (U_{LL,max}) der Leerlaufschweißspannung (U_{LL}) ausgebildet ist.

8. Schweißstromquelle (1) nach Anspruch 7, **dadurch gekennzeichnet, dass** die Schaltung (6) zur Erzeugung der Hochfrequenzpulse (U_{I,HF}) zur zeitlich synchronen Überlagerung der Hochfrequenzpulse (U_{I,HF}) der Leerlaufschweißspannung (U_{LL}) im Bereich jedes n-ten Spannungsmaximums (U_{LL,max}) der Leerlaufschweißspannung (U_{LL}) ausgebildet ist, wobei n eine ganze positive Zahl größer oder gleich 1 ist.

9. Schweißstromquelle (1) nach Anspruch 7 oder 8, **dadurch gekennzeichnet, dass** eine Messeinrichtung (7) zur Detektion der Schweißspannung (U) vorgesehen ist, welche Messeinrichtung (7) über eine Regelungseinrichtung (8) mit der Schaltung (6) zur Erzeugung der Hochfrequenzpulse (U_{I,HF}) verbunden ist, sodass die Hochfrequenzpulse (U_{I,HF}) zeitlich synchron mit detektierten definierten Spannungswerten (U_{LL,def}) überlagerbar sind.

10. Schweißstromquelle (1) nach einem der Ansprüche 7 bis 9, **dadurch gekennzeichnet, dass** die Schaltung (6) zur Erzeugung der Hochfrequenzpulse (U_{I,HF}) zur zeitlich um eine vorgegebene Zeitspanne (Δt), vorzugsweise bis 5ms, vor oder nach Auftreten des Spannungsmaximums (U_{LL,max}) versetzten Überlagerung der Hochfrequenzpulse (U_{I,HF}) ausgebildet ist.

11. Schweißstromquelle (1) nach einem der Ansprüche 7 bis 10, **dadurch gekennzeichnet, dass** der Resonanzkonverter (5) zur Erzeugung der sich periodisch ändernden Leerlaufspannung (U_{LL}) mit einer Wiederholfrequenz (f_{W}) zwischen 10Hz und 100Hz, insbesondere 33Hz, ausgebildet ist.

12. Schweißstromquelle (1) nach einem der Ansprüche 7 bis 11, **dadurch gekennzeichnet, dass** die Schaltung (6) zur Erzeugung von Hochfrequenzpulsen (U_{I,HF}) zwischen 100kHz und 10MHz ausgebildet ist.

13. Schweißstromquelle (1) nach einem der Ansprüche 7 bis 12, **dadurch gekennzeichnet, dass** der Resonanzkonverter (5) durch einen Serien-Parallel-Resonanzkonverter gebildet ist.

14. Schweißstromquelle (1) nach einem der Ansprüche 7 bis 13, **dadurch gekennzeichnet, dass** die Elektrode (3) durch eine nichtabschmelzende Elektrode, insbesondere Wolframelektrode, gebildet ist.
